# EUROPÄISCHE PATENTSCHRIFT

(11) **EP 3 526 014 B1**
(45) Veröffentlichungstag und Bekanntmachung des Hinweises auf die Patenterteilung: **19.02.2025**
(21) Anmeldenummer: 17758068.5
(22) Anmeldetag: 08.08.2017
(51) Int. Cl.: B29C 73/16, B29D 30/06

(54) **SELBSTTÄTIG ABDICHTENDES REIFENDICHTMITTEL, VERFAHREN ZUR HERSTELLUNG EINES SELBSTTÄTIG ABDICHTENDEN REIFENDICHTMITTELS UND FAHRZEUGLUFTREIFEN ENTHALTEND DAS REIFENDICHTMITTEL**
SELF-SEALING TIRE SEALANT, METHOD FOR PRODUCING A SELF-SEALING TIRE SEALANT AND PNEUMATIC VEHICLE TIRE CONTAINING THE TIRE SEALANT
AGENT D'ÉTANCHÉITÉ POUR PNEUMATIQUE À ÉTANCHÉITÉ AUTOMATIQUE, PROCÉDÉ DE FABRICATION D'UN AGENT D'ÉTANCHÉITÉ POUR PNEUMATIQUE À ÉTANCHÉITÉ AUTOMATIQUE ET PNEUMATIQUE DE VÉHICULE COMPORTANT L'AGENT D'ÉTANCHÉITÉ POUR PNEUMATIQUE

(30) Priorität: 11.10.2016 DE 102016219667
(43) Veröffentlichungstag der Anmeldung: 21.08.2019
(73) Patentinhaber: Continental Reifen Deutschland GmbH, 30175 Hannover (DE)
(72) Erfinder: DAHLKE, Markus, 31515 Wunstorf (DE); GUARDALABENE, Joe, 30659 Hannover (DE); SCHLEER, Nadja, 30451 Hannover (DE)
(74) Vertreter: Continental Corporation
(86) Internationale Anmeldenummer: PCT/EP2017/069990
(87) Internationale Veröffentlichungsnummer: WO 2018/068920

(56) Entgegenhaltungen:
- DE-A1- 102013 110 980
- US-A- 5 705 604
- US-A1- 2012 189 862
- US-A1- 2016 208 029

## Beschreibung

Die Erfindung betrifft ein selbsttätig abdichtendes Reifendichtmittel, ein Verfahren zur Herstellung eines selbsttätig abdichtenden Reifendichtmittels und einen Fahrzeugluftreifen enthaltend das Reifendichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus.

In der WO 2008/141848 A1 ist ein Verfahren zur Herstellung eines Reifendichtmittels offenbart, wobei dieses aus zwei Dichtmittelkomponenten A und B hergestellt wird. Die Komponente A ist hierbei eine hochviskose Komponente, welche wenigstens einen Kautschuk enthält. Im Wesentlichen weist der eingesetzte Kautschuk, insbesondere Butylkautschuk, eine im Vergleich zum Dichtmittel hohe Viskosität auf, die zur Herstellung des fertigen Dichtmittels (Vermischen mit Komponente B) zunächst verringert werden muss.

In der DE 102007028932 A1 ist ein Fahrzeugluftreifen offenbart, dessen Dichtmittel auf Basis von Polyurethan oder einer viskosen Mischung auf Basis eines Butylkautschukes, eines Polybutens oder auf Basis von Silikon ausgeführt sein kann.

DE 102013110890 AI offenbart, ein Verfahren zur Herstellung eines Fahrzeugluftreifens mit einem in seinem Inneren an der dem Laufstreifen gegenüberliegenden Innenfläche vorab aufgebrachten, selbsttätig abdichtenden Reifendichtmittel bereitzustellen. Das Verfahren weist wenigstens die folgenden Verfahrensschritte auf: Vermischen von zumindest Mikrosphären und wenigstens einer Polybuten-Lösung zur Herstellung einer Komponente B und Vermischen von zumindest einem Polymer und zumindest einem Vernetzer zur Herstellung einer Komponente A und Vermischen von Komponente A und Komponente B zur Herstellung eines Mikrosphären-haltigen und/oder Blähgraphit-haltigen Reifendichtmittels bei einer Temperatur von 90 bis 140 °C und Auftragen des Reifendichtmittels auf die dem Laufstreifen gegenüberliegende Innenfläche eines vulkanisierten Fahrzeugluftreifens.

Je nachdem, welche weiteren Bestandteile, insbesondere niedrigviskose Bestandteile im Reifendichtmittel enthaltend sind, können sich Probleme hinsichtlich Gesundheits- und Umweltschädlichkeit ergeben. Auch sollten die Bestandteile des Dichtmittels mit den anderen Reifenbauteilen kompatibel sein.

Der vorliegenden Erfindung liegt daher die Aufgabe zugrunde, ein selbsttätig abdichtendes Reifendichtmittel bereitzustellen, welches vergleichsweise gesundheits- und umweltfreundlich ist ohne dass die Eigenschaften des Reifendichtmittels negativ beeinträchtigt werden. Insbesondere soll es weiterhin eine gute Fließfähigkeit und Dichtwirkung aufweisen.

Gelöst wird diese Aufgabe dadurch, dass das Dichtmittel wenigstens ein Polyolefin mit einem Chlorgehalt von kleiner oder gleich 5 mg/kg enthält.

Es hat sich überraschenderweise herausgestellt, dass durch die Verwendung eines Polyolefins mit einem geringen Chlorgehalt im Reifendichtmittel die gleichen Fließ- und Abdichteigenschaften sowie Klebrigkeit erzielt wird. Das erfindungsgemäße Reifendichtmittel ist dabei aufgrund des vergleichsweise geringen Chlorgehaltes gesundheits- und umweltfreundlich. Ein hoher Chlorgehalt hat insbesondere die Bildung von Salzsäure (HCl) zur Folge, welche auch über einen längeren Zeitraum aus dem Dichtmittel z. B. in Form von Dämpfen entweichen kann. Die freiwerdende Salzsäure ist ein Grund für das umwelt- und gesundheitsschädliche Potenzial von Dichtmitteln mit einem hohen Chlorgehalt in den enthaltenen Bestandteilen.

Selbsttätig abdichtende Reifendichtmittel sind dem Fachmann bekannt. Wie eingangs ausgeführt, können diese auf Butylkautschuk und Polybuten (ein Polyolefin) basieren. Eine genauere Spezifikation des Polybutens hinsichtlich der Verunreinigungen und Nebenbestandteile, insbesondere hinsichtlich des Chlorgehaltes, ist dem Stand der Technik im Zusammenhang mit Reifendichtmitteln nicht zu entnehmen.

Gemäß vorliegender Erfindung enthält das selbsttätig abdichtende Reifendichtmittel wenigstens ein Polyolefin mit einem Chlorgehalt von kleiner oder gleich 5 mg/kg, bevorzugt kleiner oder gleich 3 mg/kg. Die Angabe bezieht sich auf mg Chlor pro einem kg des Polyolefins. In einer bevorzugten Ausführungsform der Erfindung enthält das selbsttätig abdichtende Reifendichtmittel wenigstens ein Polyolefin mit einem Chlorgehalt von kleiner oder gleich 1,5 mg/kg, besonders bevorzugt kleiner als 1 mg/kg.

Das wenigstens eine Polyolefin des Reifendichtmittels weist bevorzugt ein Zahlenmittel der Molekulargewichtsverteilung Mn gemäß GPC von 800 bis 2500 g/mol, besonders bevorzugt 1200 bis 1600 g/mol, ganz besonders bevorzugt 1200 bis 1400 g/mol, beispielsweise 1300 g/mol, auf.

Ein Polyolefin mit einem Mn von 800 bis 2500 g/mol ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das Polyolefin wenigstens ein Polybuten ist. Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene handeln.

Es ist auch ein Gemisch wenigstens eines Polybutens mit wenigstens einem weiteren Polyolefin denkbar.

Gemäß einer besonders bevorzugten Ausführungsform der Erfindung enthält das Dichtmittel somit wenigstens ein Polybuten mit einem Chlorgehalt von kleiner oder gleich 5 mg/kg. Geeignete Polybutene, auch Polyisobutene genannt, sind beispielsweise unter den Handelsnamen Glissopal^{®} der Firma BASF bekannt. Insbesondere geeignet sind hierbei Glissopal^{®} V-500, V-640 oder V-190.

Das Dichtmittel des erfindungsgemäßen Fahrzeugluftreifens enthält besonders bevorzugt 65 bis 75 Gew.-% wenigstes eines Polybutens mit einem Chlorgehalt von kleiner oder gleich 5 mg/kg.

Bevorzugt enthält das Dichtmittel zudem:
- Wenigstens einen Kautschuk und
- Wenigstens einen Füllstoff und
- Wenigstens einen Klebrigmacher und
- Wenigstens einen Vernetzer und
- Wenigstens einen Vernetzungsinitiator.

Gemäß einer vorteilhaften Ausführungsform der Erfindung enthält das Dichtmittel die Bestandteile in folgenden Mengen:
- 65 bis 75 Gew.-% wenigstes eines Polybutens mit einem Chlorgehalt von kleiner oder gleich 5 mg/kg und
- 9 bis 14,9 Gew.-% wenigstens eines Kautschuks und
- 5 bis 8,9 Gew.-% wenigstens eines Füllstoffs und
- 2 bis 3,5 Gew.-% wenigstens eines Klebrigmachers und
- 0,4 bis 0,8 Gew.-% wenigstens eines Vernetzers und
- 0,5 bis 1,2 Gew.-% wenigstens eines Vernetzungsinitiators.

Die Angaben in Gew.-% beziehen sich jeweils auf die Gesamtmenge an Dichtmittel.

Bevorzugt basiert das Dichtmittel somit auf der Vernetzung eines Kautschuks mit einem Vernetzer.

Dem Fachmann ist klar, dass die genannten Bestandteile im vernetzten Dichtmittel zumindest teilweise in chemisch veränderter Form, insbesondere als Derivate, vorliegen.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk in Verfahrensschritt a) um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR).

Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Bei dem Füllstoff kann es sich um alle dem Fachmann bekannten Füllstoffe handeln, wie insbesondere Ruß und/oder Kieselsäure.

Gemäß einer bevorzugten Ausführungsform der Erfindung umfasst der Füllstoff in wenigstens einen Ruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Hierbei kann es sich um alle dem Fachmann bekannten Rußtypen handeln, wie insbesondere und bevorzugt ein Ruß des Typs N326.

Unter Klebrigmacher wird eine Substanz verstanden, die die Klebrigkeit des Dichtmittels erhöht. Bevorzugt ist der Klebrigmacher wenigstens ein Klebharz, welches ausgewählt ist aus der Gruppe bestehend aus Alkylharzen und Phenolharzen und Gum Resin ("Gummiharz"), insbesondere Tetrahydroabeitinsäure und/oder Kolophonium und/oder Balsamharz, und Koresin und aromatische Harze und Terpen -Oligomere und Coumarone-Inden-Harze.

Insbesondere durch die Kombination eines Vernetzers mit einem Vernetzungsinitiator wird ein besonders wirksames, im Pannenfall schnell abdichtendes Reifendichtmittel erhalten.

Gemäß einer bevorzugten Ausführungsform der Erfindung ist der Vernetzer ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Mit den bevorzugten und besonders bevorzugten Vernetzern wird eine extrem schnelle Vernetzung bei relativ niedrigen Temperaturen erzielt. Dies ermöglicht bei der Herstellung des Dichtmittels eine Anwendung von Rezepten mit niedrigen Viskositäten die schnell nach dem Aufbringen des Materials in den Reifen ortsfest sind.

Der Vernetzungsinitiator ist eine chemische Verbindung, welche die Vernetzung des Dichtmittels initiiert. Bei dem Vernetzungsinitiator kann es sich beispielsweise und bevorzugt um Bleioxid oder andere Metalloxide oder eine peroxidische Verbindung handeln.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern.

Das Dichtmittel kann ferner weitere Bestandteile enthalten, wie insbesondere Weichmacher, wie z. B. Öl(e), sowie gegebenenfalls weitere Zusatzstoffe, wie z. B. Farbpigmente und/oder Zinkoxid und/oder Schwefel und/oder Mikrosphären und/oder Glaskugeln und/oder Plastikpartikel.

Bei dem Öl kann es sich um alle dem Fachmann bekannten Öle handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Das Dichtmittel enthält bevorzugt keine Substanz, die einen Chlorgehalt von größer als 5 mg/kg bezogen auf die jeweilige Substanz aufweist, d.h. es ist bevorzugt frei von derartigen Substanzen, insbesondere bevorzugt frei von Polybuten mit einem Chlorgehalt von größer als 5 mg/kg bezogen auf das jeweilige Polybuten.

Damit ist der Chlorgehalt bezogen auf die Gesamtmenge an Dichtmittel bevorzugt durch das oder die eingesetzten oben beschriebene(n) Polybuten(e) eingestellt.

Ein weiterer Gegenstand der vorliegenden Erfindung betrifft ein Verfahren zur Herstellung eines Reifendichtmittels, welches wenigstens folgende Verfahrensschritte umfasst:
a) Vermischen wenigstens eines Kautschuks mit wenigstens einem Füllstoff zur Herstellung eines Masterbatches; und
b) Vermischen des Masterbatches mit wenigstens einem Polyolefin mit einem Chlorgehalt von kleiner oder gleich 5 mg/kg zur Herstellung einer Komponente A; und
c) Bereitstellung einer Komponente B enthaltend wenigstens einen Vernetzungsinitiator; und
d) Vermischen von Komponente A und Komponente B zur Herstellung des Reifendichtmittels.

Für sämtliche Bestandteile gelten die oben getroffenen Ausführungen, wenn es nicht explizit anders erwähnt ist.

Erfindungsgemäß wird in Verfahrensschritt a) zunächst ein Masterbatch hergestellt, welcher wenigstens einen Kautschuk und wenigstens einen Füllstoff enthält. Für Kautschuk und Füllstoff gelten sämtliche oben getroffene Ausführungen. Besonders bevorzugt wird in Verfahrensschritt a) wenigstens Butylkautschuk (IIR) verwendet. Butylkautschuk eignet sich besonders gut, da er eine vergleichsweise hohe Luftdichtigkeit aufweist.

In Verfahrensschritt a) können weitere Bestandteile wie oben ausgeführt hinzugegeben werden, wie Verarbeitungshilfsmittel, insbesondere Klebrigmacher und/oder wenigstens ein Weichmacher sowie gegebenenfalls weitere Zusatzstoffe.

Verfahrensschritt a) kann dabei in einer oder mehreren Mischstufen durchgeführt werden.

In Verfahrensschritt a) kann bevorzugt und insbesondere auch wenigstens ein Vernetzer hinzugefügt werden, wobei ebenfalls auf die bereits getroffenen Ausführungen zu dem/den Vernetzer(n) verwiesen wird.

Der in Schritt a) hergestellte Masterbatch wird in Verfahrensschritt b) mit wenigstens einem Polyolefin mit einem Chlorgehalt von kleiner oder gleich 5 mg/kg vermischt, wodurch die Komponente A hergestellt wird.

Das wenigstens eine Polyolefin ist besonders bevorzugt wenigstens ein Polybuten, wie auch oben für das Dichtmittel ausgeführt. Dieses stellt die Klebrigkeit des fertigen Dichtmittels ein und bestimmt die Fließfähigkeit der Komponente A im Produktionsprozess sowie die lokale Ortsfestigkeit des fertigen Dichtmittels. Bevorzugt ist wenigstens ein Polyolefin, bevorzugt Polybuten, mit einem Zahlenmittel der Molekulargewichtsverteilung Mn gemäß GPC von 800 bis 2500 g/mol, besonders bevorzugt 1200 bis 1600 g/mol, wiederum besonders bevorzugt 1200 bis 1400 g/mol, insbesondere beispielhaft 1300 g/mol.

Bevorzugt erfolgt die Herstellung von Komponente A in Verfahrensschritt b) in einem Knetextruder oder einem Doppelschneckenextruder. Hierdurch wird eine ausreichende Durchmischung des nahezu festen Masterbatches mit dem niederviskosen Polyolefin erzielt. Die genannten Extruder sind somit für die Verarbeitung hoher Viskositäten besonders geeignet. Es sind aber auch andere hierfür geeignete Vorrichtungen denkbar.

Besonders bevorzugt erfolgt die Herstellung von Komponente A in Verfahrensschritt b) in einem Doppelschneckenextruder.

Erfindungsgemäß erfolgt in Verfahrensschritt c) die Bereitstellung einer Komponente B enthaltend wenigstens einen Vernetzungsinitiator, wobei für diesen auf die oben getroffenen Ausführungen verwiesen wird.

Bevorzugt ist in Verfahrensschritt c) in Komponente B wenigstens ein Polyolefin mit einem Chlorgehalt von kleiner oder gleich 5 mg/kg enthalten. Das bedeutet, dass bevorzugt auch über die Komponente B wenigstens ein Polyolefin mit einem Chlorgehalt von kleiner oder gleich 5 mg/kg dem Dichtmittel zugegeben wird. Hierdurch werden eine optimale Klebrigkeit, Fließfähigkeit sowie lokale Ortsfestigkeit des fertigen Dichtmittels eingestellt und gleichzeitig kann auf sonstige Bestandteile verzichtet werden, die ein größeres Potenzial zur Umweltgefährdung darstellen könnten. Mit der Verwendung von wenigstens einem Polyolefin mit einem Chlorgehalt von kleiner oder gleich 5 mg/kg in beiden Komponenten des Dichtmittels kann somit der Gesamtchlorgehalt des hergestellten Dichtmittels über den geringen Chlorgehalt des Polyolefins bestimmt werden bzw. besonders gering eingestellt werden.

Erfindungsgemäß erfolgt in Verfahrensschritt d) das Vermischen von Komponente A und Komponente B zur Herstellung des Reifendichtmittels.

Sonstige Verfahrensschritte und Vorrichtungen sind bevorzugt wie in der WO 2008/141848 offenbart ausgeführt.

Ein weiterer Gegenstand der vorliegenden Erfindung ist ein Fahrzeugluftreifen, der das erfindungsgemäße Reifendichtmittel inklusive aller genannten Ausführungen wenigstens auf der dem Laufstreifen gegenüberliegenden Innenfläche aufweist.

Im Folgenden soll die Erfindung anhand eines Beispiels erläutert werden.

### Herstellung des Dichtmittels:

Beispielsweise wird zunächst eine Komponente A aus einem Masterbatch und Polybuten hergestellt:
Hierbei wird zunächst in einem Innenmischer ein Masterbatch hergestellt, der 45 bis 50 Gew.% Butylkautschuk, 25 bis 30 Gew.-% Ruß N326, 2 bis 5 Gew.-% MES-Öl, 2 bis 3 Gew.-% Zinkoxid, 8 bis 10 Gew.-% Klebharz, 2 bis 4 Gew.-% Chinondioxim sowie 0,5 bis 3 Gew.-% Schwefel enthält.

Die Gew.-% beziehen sich jeweils auf den Anteil bezogen auf die Gesamtmenge des Masterbatches.

In einem Doppelschneckenextruder werden 25 bis 30 Gew.-% des Masterbatches dann gemäß einem Verfahrensschritt b) kontinuierlich mit 65 bis 70 Gew.-% Polybuten (z. B. Glissopal^{®} V-500, Chlorgehalt < 1 mg/kg) und 1 bis 5 Gew.-% Paraffinöl vermischt, wodurch die Komponente A hergestellt ist. Die Gew.-% beziehen sich jeweils auf den Anteil bezogen auf die Gesamtmenge der Komponente A.

Es wird gemäß einem Schritt c) die Komponente B enthaltend 70 bis 75 Gew.-% Polybuten (z. B. Glissopal^{®} V-500) und 25 bis 30 Gew.-% Dibenzoylperoxid-Lösung (50 Gew.-% Dibenzoylperoxid in Dibutylmaleat) bereitgestellt, wobei sich die Gew.-% auf die Gesamtmenge der Komponente B beziehen.

Gemäß einem Schritt d) werden beispielsweise Komponente A und Komponente B im Gewichtsverhältnis 10 zu 1 miteinander vermischt, wodurch das Dichtmittel erhalten wird.

Die Vernetzung erfolgt bei und nach dem Vermischen von Komponente A und Komponente B.

Das somit hergestellte Reifendichmittel weist einen geringen Gesamtchlorgehalt auf, der über die zugegebenen Polybutene bestimmt ist.

Das erfindungsgemäß erhaltene Reifendichtmittel wird mittels bekannter Vorrichtungen auf die Innenseite eines Fahrzeugluftreifens aufgebracht.

## Patentansprüche

1. Selbsttätig abdichtendes Reifendichtmittel, **dadurch gekennzeichnet, dass** es wenigstens ein Polyolefin mit einem Chlorgehalt von kleiner oder gleich 5 mg/kg enthält.

2. Reifendichtmittel nach Anspruch 1, **dadurch gekennzeichnet, dass** es zudem folgende Bestandteile enthält:
- Wenigstens einen Kautschuk und
- Wenigstens einen Füllstoff und
- Wenigstens einen Klebrigmacher und
- Wenigstens einen Vernetzer und
- Wenigstens einen Vernetzungsinitiator.

3. Reifendichtmittel nach Anspruch 1 oder 2, **dadurch gekennzeichnet, dass** das wenigstens eine Polyolefin ein Zahlenmittel der Molekulargewichtsverteilung Mn gemäß GPC von 800 bis 2500 g/mol aufweist.

4. Reifendichtmittel nach einem der vorherigen Ansprüche, **dadurch gekennzeichnet, dass** das wenigstens eine Polyolefin wenigstens ein Polybuten ist.

5. Reifendichtmittel nach Anspruch 4, **dadurch gekennzeichnet, dass** es 65 bis 75 Gew.-% wenigstens eines Polybutens mit einem Chlorgehalt von kleiner oder gleich 5 mg/kg enthält.

6. Reifendichtmittel nach einem der Ansprüche 2 bis 5, **dadurch gekennzeichnet, dass** es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) handelt.

7. Reifendichtmittel nach einem der Ansprüche 2 bis 6, **dadurch gekennzeichnet, dass** es sich bei dem Kautschuk wenigstens um Butylkautschuk (IIR) handelt.

8. Reifendichtmittel nach einem der Ansprüche 2 bis 7, **dadurch gekennzeichnet, dass** der Füllstoff wenigstens einen Ruß umfasst.

9. Reifendichtmittel nach einem der Ansprüche 2 bis 8, **dadurch gekennzeichnet, dass** der Vernetzer ausgewählt ist aus der Gruppe enthaltend Polymethylolharz und Divinylbenzol und Chinonen.

10. Reifendichtmittel nach einem der Ansprüche 2 bis 9, **dadurch gekennzeichnet, dass** der wenigstens eine Vernetzungsinitiator ausgewählt ist aus der Gruppe enthaltend Bleioxid und andere Metalloxide und peroxidische Verbindungen.

11. Reifendichtmittel nach einem der Ansprüche 2 bis 10, **dadurch gekennzeichnet, dass** der Klebrigmacher ein Klebharz ist, welches ausgewählt ist aus der Gruppe bestehend aus Alkylharzen und Phenolharzen und Gum Resin, insbesondere Tetrahydroabeitinsäure und/oder Kolophonium und/oder Balsamharz, und Koresin und aromatische Harze und Terpen -Oligomere und Coumarone-Inden-Harzen.

12. Verfahren zur Herstellung eines Reifendichtmittels, welches wenigstens folgende Verfahrensschritte umfasst:
a) Vermischen wenigstens eines Kautschuks mit wenigstens einem Füllstoff zur Herstellung eines Masterbatches; und
b) Vermischen des Masterbatches mit wenigstens einem Polyolefin mit einem Chlorgehalt von kleiner oder gleich 5 mg/kg zur Herstellung einer Komponente A; und
c) Bereitstellung einer Komponente B enthaltend wenigstens einen Vernetzungsinitiator; und
d) Vermischen von Komponente A und Komponente B zur Herstellung des Reifendichtmittels.

13. Verfahren nach Anspruch 12, **dadurch gekennzeichnet, dass** in Verfahrensschritt c) in Komponente B ein Polyolefin mit einem Chlorgehalt von kleiner oder gleich 5 mg/kg enthalten ist.

14. Fahrzeugluftreifen, der das Reifendichtmittel nach einem der Ansprüche 1 bis 11 wenigstens auf der dem Laufstreifen gegenüberliegenden Innenfläche aufweist.

## Claims

1. Self-sealing tyre sealant, **characterized in that** it contains at least one polyolefin having a chlorine content not more than 5 mg/kg.

2. Tyre sealant according to Claim 1, **characterized in that** it additionally contains the following constituents:
- at least one rubber and
- at least one filler and
- at least one tackifier and
- at least one crosslinker and
- at least one crosslinking initiator.

3. Tyre sealant according to Claim 1 or 2, **characterized in that** the at least one polyolefin has a number-average molecular weight distribution Mn according to GPC of 800 to 2500 g/mol.

4. Tyre sealant according to any of the preceding claims, **characterized in that** the at least one polyolefin is at least one polybutene.

5. Tyre sealant according to Claim 4, **characterized in that** it contains 65% to 75% by weight of at least one polybutene having a chlorine content of not more than 5 mg/kg.

6. Tyre sealant according to any of Claims 2 to 5, **characterized in that** the rubber is natural rubber (NR) and/or butadiene rubber (BR) and/or isoprene rubber (IR) and/or styrene-butadiene rubber (SBR) and/or polychloroprene (CR) and/or butyl rubber (IIR) and/or bromobutyl rubber (BIIR) and/or chlorobutyl rubber (CIIR).

7. Tyre sealant according to any of Claims 2 to 6, **characterized in that** the rubber is at least butyl rubber (IIR).

8. Tyre sealant according to any of Claims 2 to 7, **characterized in that** the filler comprises at least one carbon black.

9. Tyre sealant according to any of Claims 2 to 8, **characterized in that** the crosslinker is selected from the group containing polymethylol resin and divinylbenzene and quinones.

10. Tyre sealant according to any of Claims 2 to 9, **characterized in that** the at least one crosslinking initiator is selected from the group containing lead oxide and other metal oxides and peroxidic compounds.

11. Tyre sealant according to any of Claims 2 to 10, **characterized in that** the tackifier is a tackifying resin which is selected from the group consisting of alkyl resins and phenolic resins and gum resin, in particular tetrahydroabietic acid and/or rosin and/or balsam resin, and coresin and aromatic resins and terpene oligomers and coumarone-indene resins.

12. Process for producing a tyre sealant which comprises at least the process steps of:
a) mixing at least one rubber with at least one filler to produce a masterbatch; and
b) mixing the masterbatch with at least one polyolefin having a chlorine content of not more than 5 mg/kg to produce a component A; and
c) providing a component B containing at least one crosslinking initiator; and
d) mixing component A and component B to produce the tyre sealant.

13. Process according to Claim 12, **characterized in that** in process step c) component B contains a polyolefin having a chlorine content of not more than 5 mg/kg.

14. Pneumatic vehicle tyre which comprises the tyre sealant according to any of Claims 1 to 11 at least on the inner surface opposite the tread.

## Revendications

1. Agent d'étanchéité auto-obturant pour pneumatique, **caractérisé en ce qu'**il contient au moins une polyoléfine présentant une teneur en chlore inférieure ou égale à 5 mg/kg.

2. Agent d'étanchéité pour pneumatique selon la revendication 1, **caractérisé en ce qu'**il contient en outre les constituants suivants :
- au moins un caoutchouc et
- au moins une charge et
- au moins un agent poisseux et
- au moins un réticulant et
- au moins un initiateur de réticulation.

3. Agent d'étanchéité pour pneumatique selon la revendication 1 ou 2, **caractérisé en ce que** ladite au moins une polyoléfine présente une moyenne numérique de la répartition de poids moléculaires Mn selon CPG de 800 à 2500 g/mole.

4. Agent d'étanchéité pour pneumatique selon l'une des revendications précédentes, **caractérisé en ce que** ladite au moins une polyoléfine est au moins un polybutylène.

5. Agent d'étanchéité pour pneumatique selon la revendication 4, **caractérisé en ce qu'**il contient 65 à 75% en poids d'au moins un polybutylène présentant une teneur en chlore inférieure ou égale à 5 mg/kg.

6. Agent d'étanchéité pour pneumatique selon l'une des revendications 2 à 5, **caractérisé en ce qu'**il s'agit, pour le caoutchouc, de caoutchouc naturel (NR) et/ou de caoutchouc de butadiène (BR) et/ou de caoutchouc d'isoprène (IR) et/ou caoutchouc de styrène-butadiène (SBR) et/ou de polychloroprène (CR) et/ou de caoutchouc de butyle (IIR) et/ou caoutchouc de bromobutyle (BIIR) et/ou caoutchouc de chlorobutyle (CIIR).

7. Agent d'étanchéité pour pneumatique selon l'une des revendications 2 à 6, **caractérisé en ce qu'**il s'agit, pour le caoutchouc, d'au moins un caoutchouc de butyle (IIR).

8. Agent d'étanchéité pour pneumatique selon l'une des revendications 2 à 7, **caractérisé en ce que** la charge comprend au moins une suie.

9. Agent d'étanchéité pour pneumatique selon l'une des revendications 2 à 8, **caractérisé en ce que** le réticulant est choisi dans le groupe contenant la résine de polyméthylol et le divinylbenzène et les quinones.

10. Agent d'étanchéité pour pneumatique selon l'une des revendications 2 à 9, **caractérisé en ce que** ledit au moins un initiateur de réticulation est choisi dans le groupe contenant l'oxyde de plomb et d'autres oxydes métalliques et les composés peroxydes.

11. Agent d'étanchéité pour pneumatique selon l'une des revendications 2 à 10, **caractérisé en ce que** l'agent poisseux est une résine collante qui est choisie dans le groupe constitué par les résines alkyle et les résines phénoliques et la gomme-résine, en particulier l'acide tétrahydroabiétique et/ou le colophonium et/ou la colophane et la corésine et les résines aromatiques et les oligomères terpéniques et les résines de coumarone-indène.

12. Procédé de préparation d'un agent d'étanchéité pour pneumatique, qui comprend au moins les étapes de procédé suivantes :
a) mélange d'au moins un caoutchouc avec au moins une charge pour la préparation d'un mélange maître et
b) mélange du mélange maître avec au moins une polyoléfine présentant une teneur en chlore inférieure ou égale à 5 mg/kg pour la préparation d'un composant A ; et
c) mise à disposition d'un composant B contenant au moins un initiateur de réticulation ; et
d) mélange du composant A et du composant B pour la préparation de l'agent d'étanchéité pour pneumatique.

13. Procédé selon la revendication 12, **caractérisé en ce que** dans l'étape de procédé c), le composant B contient une polyoléfine présentant une teneur en chlore inférieure ou égale à 5 mg/kg.

14. Pneumatique pour véhicule, qui présente l'agent d'étanchéité pour pneumatique selon l'une des revendications 1 à 11 au moins sur la face interne opposée à la bande de roulement.
